# EUROPÄISCHE PATENTSCHRIFT

(11) **EP 1 613 684 B1**
(45) Veröffentlichungstag und Bekanntmachung des Hinweises auf die Patenterteilung: **28.06.2006**
(21) Anmeldenummer: 04724282.1
(22) Anmeldetag: 30.03.2004
(51) Int. Cl.: C08G 65/20

(54) **VERFAHREN ZUR HERSTELLUNG VON TETRAHYDROFURAN-COPOLYMEREN**
METHOD FOR PRODUCING TETRAHYDROFURAN COPOLYMERS
PROCEDE DE PRODUCTION DE COPOLYMERES DE TETRAHYDROFURANE

(30) Priorität: 01.04.2003 DE 10314648
(43) Veröffentlichungstag der Anmeldung: 11.01.2006
(73) Patentinhaber: BASF Aktiengesellschaft, 67056 Ludwigshafen (DE)
(72) Erfinder: HAUBNER, Martin, 69124 Eppelheim (DE); PINKOS, Rolf, 67098 Bad Dürkheim (DE)
(86) Internationale Anmeldenummer: PCT/EP2004/003336
(87) Internationale Veröffentlichungsnummer: WO 2004/087786

(56) Entgegenhaltungen:
- EP-A- 0 126 471
- EP-A- 0 158 229
- EP-A- 1 004 610

## Beschreibung

Die vorliegende Erfindung betrifft ein neues Verfahren zur Herstellung von Polyoxyalkylenglykolen (Polyalkylenetherglykolen) durch Copolymerisation von Tetrahydrofuran - im Folgenden kurz "THF" genannt - mit Neopentylglykol in Gegenwart von Heteropolysäuren, bei dem vorbehandelter Neopentylglykol verwendet wird.

Polyoxyalkylenglykole sind wichtige Ausgangsstoffe für die Herstellung von elastischen Fasern, elastischen Konstruktionswerkstoffen und Beschichtungen. Man kann sie unter anderem durch Polymerisation von THF oder durch Copolymerisation von THF mit alpha, omega-Diolen wie z.B Neopentylglykol - im Folgenden kurz "NPG" genannt - in Gegenwart kationischer Katalysatoren herstellen. Es ist beispielsweise aus EP-A 126 471 bekannt, als Katalysatoren Heteropolysäuren zu verwenden. Durch dieses Verfahren werden Polyalkylenetherglykole einstufig zugänglich, während man nach anderen Verfahren zunächst die Ester der Polyoxyalkylenglykole erhält, die vor ihrer Verwendung auf dem Gebiet der Polymeren noch zu den Polyoxyalkylenglykolen hydrolysiert werden müssen.

Heteropolysäuren werden dabei in marktüblicher Form entweder getrocknet mit einem Wassergehalt von 1 bis 10 mol oder ungetrocknet mit einem Wassergehalt von 10 bis 40 mol Wasser pro Mol Heteropolysäure eingesetzt. Die schnelle Deaktivierung des Heteropolysäure-Katalysators erweist sich insbesondere bei kontinuierlich geführten Copolymerisationen und Prozessen mit wiederverwendetem Katalysator als besonders nachteilig, da sie zu sinkenden Polymerisationsumsätzen führt.

Es bestand daher die Aufgabe ein einfaches und kostengünstiges Verfahren zur Herstellung von THF-Copolymeren mit alpha, omega-Diolen bereitzustellen, das zur Herstellung von THF-Copolymeren mit alpha, omega-Diolen mit gleichbleibenden Copolymerisationsumsätzen auch bei wiederverwendetem Heteropolysäure-Katalysator geeignet ist.

Überraschenderweise wurde nun ein Verfahren zur einstufigen Herstellung von Polyoxyalkylenglykolen durch Copolymerisation von THF und Neopentylglykol Gegenwart einer Heteropolysäure gefunden, das dadurch gekennzeichnet ist, dass der Gehalt an organisch gebundenem Stickstoff in dem eingesetzten Neopentylglykol kleiner 5 ppm, ist.

Unter organisch gebundenem Stickstoff werden in dieser Anmeldung insbesondere Amine oder organische Ammoniumverbindungen verstanden. Ihre Bestimmung erfolgt durch eine aus der Literatur, bspw. F. Ehrenberger, Quantitative organische Elementaranalyse, Verlag Chemie, 1991, Kap. 37, S. 382-384, bekannte Chemolumineszenzbestimmung.

Das Die marktübliche Neopentylglikol technischer Qualität wird mit an sich bekannten Verfahren behandelt, um den Gesamtanteil des organisch gebundenen Stickstoffs auf unter 5 ppm zu senken.

Eine Möglichkeit zur Reinigung von testen Neopentylglykol alpha, omega-Diolen technischer Qualität zur Verwendung in dem erfindungsgemäßen Verfahren ist das Umkristallisieren des Neopentylglykols aus organischen Lösungsmitteln.

Als organische Lösungsmittel sind C₁ bis C₁₀-Alkohole wie zum Beispiel Methan, Ethanol, Propanol oder Isopropanol, C₁ bis C₁₀-Ether wie zum Beispiel Tetrahydrofuran, Diethylether, Butylmethylether oder halogenierte Lösungsmittel wie Chloroform oder Dichlormethan oder deren Gemische, geeignet. Bevorzugt werden C₁- bis C₁₀-Alkohole, besonders bevorzugt Methanol verwendet.

Im Produktionsmaßstab bietet sich weiterhin die an sich bekannten Schicht- oder Suspensionskristallisation an, bei der die Reinigung durch Kristallisation aus der Schmelze erreicht wird und Verunreinigungen in der Schmelze zurückbleiben.

Eine weitere Reinigungsform für die erfindungsgemäß verwendeten Neopentylglykols ist die Lösungsmittel-Extraktion einer gesättigten, wässrigen, alkoholischen oder tetrahydrofuranhaltigen Lösung des Neopentylglykols mit gesättigten oder ungesättigten aliphatischen, cycloaliphatischen oder olefinischen C₄- bis C₁₅-Kohlenwasserstoffen oder C₄- bis C₁₅-Ethern. Es können jedoch auch Kohlenwasserstoffe eingesetzt werden, die gegebenenfalls Halogenatome wie Chlor enthalten. Ferner sind auch Gemische der oben genannten Stoffklassen zur Extraktion geeignet, die einen Anteil von mindestens 50 Gew.-% des Kohlenwasserstoffs oder Ethers aufweisen.

Im Produktionsmaßstab können Flüssig-Flüssig-Extraktion ein- oder mehrstufig, im Allgemeinen bis zu 5 Stufen, in üblicherweise durchgeführt. Geeignete Apparaturen und Verfahrensweisen sind dem Fachmann bekannt und z.B. in "Ullmanns Encyclopedia of Industrial Chemistry, 6th Edition, Electronic Release" beschrieben. Diskontinuierliche Extraktionen können beispielsweise im Rührbehälter ausgeführt werden. Beispiele für die kontinuierliche Extraktion sind die Verwendung von Siebbodenkolonnen, Rührkolonnen und Extraktionsbaterien, wie z.B. Mixer-Settler. Auch Membranextraktoren, wie z.B. Hohlfasermodule, können angewendet werden.

Weiterhin können alle bekannten anorganischen und organischen Ionentauscher, wie sie beispielsweise aus Ullmann's Encyclopedia of Industriel Chemistry, 6th Edition, electronic release, 2000, bekannt sind, zur Entfernung des organisch gebundenen Stickstoffs aus den alpha, omage-Diolen verwendet werden. Geeignete saure Ionenäustauschern, auch Kationentauscher genannt, sind stark saure Ionenaustauscher, die an ein organisches polymeres Grundgerüst über Benzolgruppen gebundene Sulfonsäuregruppen enthalten, und beispielsweise in Form der Handelsprodukte Amberlite® Ir 120, Amberjet® 1200 H und Duolite® C20 von der Firma Rohm & Haas, Darmstadt, Dowex® HCR von der Firma Dow Chemical, Midland, Michigan, USA, Lewatit® K2621 und Lewatit® S100 der Firma Bayer AG, Leverkusen vertreiben werden, in allen möglichen Formen, beispielsweise körnig oder als Gel. Geeignet sind auch schwach saure lonenaustauscher, in der Regel ein Polyacrylate, die beispielsweise in Form der Handelsprodukte Amberlite® IRC 76 und Duolite® C433 von der Firma Rohm & Haas, Darmstadt vertrieben werden. Geeignet sind zudem Tonerden und Zeolithe in der H-Form. Bei kontinuierlicher Durchführung der Copolymerisation kann das Neopentylglykol über einen mit lonenaustauscher gefüllten Vorreaktor in den Polymerisationsreaktor geleitet werden. Vorteilhafterweise wird das Neopentylglykol im Gemisch mit THF sowie gegebenenfalls einem Kohlenwasserstoff und Wasser also dem Reaktionsmedium der Polymerisation, über den Ionentauscher geleitet.

Von den Reinigungsverfahren zur Entfernung des organisch gebundenen Stickstoffs auf weniger als 5 ppm ist die Behandlung mit Ionentauschern bevorzugt.

Es werden erfindungsgemäß 1 bis 60 Gew.-% des Neopentylglykols bezogen auf das eingesetzt Tetrahydrofuran, bevorzugt 2 bis 40 Gew.-%, besonders bevorzugt 3 bis 20 Gew.-% in die Copolymerisation eingesetzt.

Tetrahydrofuran wird in einer Menge von 40 bis 99 Gew.%, bezogen auf die Gesamtmenge aus THF und alpha, omega-Diol, bevorzugt in einer Menge von 60 bis 98 Gew.-%, besonders bevorzugt 80 bis 97 Gew.-%, in der Copolymerisation verwendet.

Die Copolymerisation des THF mit Neopentylglykol in Gegenwart von Heteropolysäuren als Katalysatoren erfolgt in an sich bekannter Weise, wie sie zum Beispiel in EP-A 126 471 beschrieben ist.

Die erfindungsgemäße Copolymerisation wird bevorzugt in Gegenwart eines Kohlenwasserstoffs durchgeführt. Im Gemisch mit diesem Kohlenwasserstoff wird Wasser aus der Copolymerisationslösung abdestilliert. Unter Gemisch wird dabei in dieser Anmeldung neben üblichen nicht-azeotropen Gemischen ein Kohlenwasserstoff-Wasser-Azeotrop verstanden. Diese Fahrweise ist in der deutschen Patentanmeldung Nr. 102 399 47.6 vom 30.08.2002 der BASF-Aktiengesellschaft mit dem Titel "Verfahren zur Herstellung von Tetrahydrofuran-Copolymeren", auf die hier ausdrücklich Bezug genommen wird, beschrieben.

Die verwendeten Kohlenwasserstoffe sollen zur Azeotropbildung mit Wasser geeignet sein. Als Kohlenwasserstoff werden zum Beispiel aliphatische oder cycloaliphatische Kohlenwasserstoffe mit 4 bis 12 C-Atomen oder aromatische Kohlenwasserstoffe mit 6 bis 10 C-Atomen oder deren Gemische eingesetzt. Im einzelnen sein z.B. Pentan, Hexan, Heptan, Octan, Decan, Cyclopentan, Cyclohexan, Benzol, Toluol, Xylol oder Naphthalin genannt, von denen Pentan, Cyclopentan und Octan bevorzugt sind und Pentan besonders bevorzugt ist.

Die Kohlenwasserstoffe werden dem Frischzulauf der Copolymerisation in einer Menge von 1 x 10⁻⁴ Gew.-% (entsprechend 1 ppm) bis 30 Gew-%, bezogen auf den Frischzulauf aus alpha, omega-Diol und THF, bevorzugt 1 ppm bis 16 Gew.-%, besonders bevorzugt 1 bis 10 Gew.-%, zugegeben. Es ist jedoch auch möglich, den Kohlenwasserstoff in den Kopf der Destillationskolonne zur Abtrennung des Gemisches aus Kohlenwasserstoff und Wasser einzuleiten. Über die Gesamtmenge an Wasser, die aus der Copolymerisation ausgeschleust wird, kann das jeweilige Molgewicht eingestellt werden. Im allgemeinen bindet 1 Mol Heteropolysäure 10 bis 40 Moleküle Wasser durch koordinative Bindung. Die als Katalysatoren verwendeten Heteropolysäuren sollten sollten etwa 1 bis 10 Moleküle Wasser pro Molekül Heteropolysäure enthalten. Zudem wird durch die Copolymerisation mit dem als Comonomer verwendeten Neopentylglykol Wasser frei. Je höher der Wassergehalt der Copolymerisationslösung ist, desto niedriger ist das Molekulargewicht des erhaltenen Copolymerisats.

Unter der Bezeichnung "mittleres Molekulargewicht" oder "mittlere Molmasse" wird in dieser Anmeldung das Zahlenmittel Mn des Molekulargewichts der im gebildeten Polymerisat enthaltenen Polymeren verstanden.

Heteropolysäuren, die erfindungsgemäß verwendet werden, sind anorganische Polysäuren, die im Gegensatz zu Isopolysäuren mindestens zwei verschiedene Zentralatome besitzen. Heteropolysäuren entstehen aus jeweils schwachen mehrbasigen Sauerstoffsäuren eines Metalles, wie Chrom, Molybdän, Vanadium und Wolfram sowie eines Nichtmetalles, wie Arsen, Jod, Phosphor, Selen, Silizium, Bor und Tellur als partielle gemischte Anhydride. Als Beispiele seine die Dodecawolframphosphorsäure H₃(PW₁₂O₄₀) oder die Decamolybdophosporsäure H₃(PMo₁₂O₄₀) genannt. Die Heteropolysäuren können als zweites Zentralatom auch Aktinoide oder Lanthanoide enthalten (Z. Chemie 17 (1977), Seiten 353 bis 357 bzw. 19 (1979), 308). Die Heteropolysäuren können allgemein durch die Formel H₈₋ₙ(YⁿM₁₉O₄₀) mit n = Wertigkeit des Elementes Y (z.B. Bor, Silizium, Zink) beschrieben werden (s. auch Heteropoly- und Isopolyoxomtalates, Berlin; Springer 1983). Für das erfindungsgemäße Verfahren sind als Katalysatoren Phosphorwolframsäure, Phosphormolybdänsäure, Siliziummolybdänsäure und Siliziumwolframsäure besonders gut geeignet.

Die als Katalysatoren verwendeten Heteropolysäuren können sowohl getrocknet (1 bis 10 Mol Wasser/Mol Heteropolysäure) oder ungetrocknet (10 bis 40 Mol Wasser/Heteropolysäure) in der Copolymerisation verwendet werden.

Das im Copolymerisationsreaktor vorhandene Wasser, bei dem es sich zum Teil um Kristallwasser aus der Heteropolysäure und zum Teil um während der Reaktion entstandenes Wasser handelt, wird als Gemisch des mit dem Frischzulauf zugesetzten Kohlenwasserstoffs mit Wasser bei einer Temperatur von 40 bis 120°C, besonders bevorzugt von 50 bis 70°C und einem Druck von 150 mbar bis 2 bar, bevorzugt 230 mbar mit Hilfe einer üblichen Destillationseinrichtung direkt aus der Copolymerisation, das heißt aus dem Copolymerisationsreaktor ohne zwischengeschaltete Aufarbeitungsschritte wie Phasentrennungen, abgetrennt.

Der entstehende Brüden wird bevorzugt in einem Oberflächenkondensator niedergeschlagen; jedoch sind auch Quench und Einspritzkondensatoren möglich. Das anfallende Kondensat wird zur Auskreisung des Wassers der Lösemittelaufarbeitung zugeführt. Besonders günstig ist eine teilweise Rückführung des Kondensats in den Reaktor, d.h. eine Abführung der Reaktionswärme mittels Siedekühlung. Zur Erreichung möglichst hoher Wassergehalte im abzuziehenden Kondensat kann zwischen Reaktor und Kondensator noch eine mehrstufige, mit dem Rückführkondensat als Rücklauf beaufschlagte Gegenstrom-Rektifikationskolonne eingefügt sein.

In einer weiteren Ausführungsform wird gleichzeitig mit dem Gemisch des in die Copolymerisation eingesetzten Kohlenwasserstoffs mit Wasser THF abdestilliert, welches abhängig vom Kohlenwasserstoff ein ternäres Azeotrop bilden kann.

Der im Gemisch mit Wasser abdestillierte Kohlenwasserstoff oder die Gemische von Wasser und Kohlenwasserstoff mit Tetrahydrofuran können mit einem geeigneten festen Adsorbtionsmittel, beispielsweise an Molekularsiebe getrocknet und erneut in die Copolymerisation zurückgeführt werden. Auch eine Phasentrennung in eine wässrige Phase und den Kohlenwasserstoff ist denkbar. Die wässrige Phase enthält bis 5 Gew.-% an THF, bevorzugt < 1 Gew.-%. Ferner enthält sie in Konzentrationen < 1 Gew.- % den jeweiligen Kohlenwasserstoff. THF und der Kohlenwasserstoff können durch destillative Aufarbeitung der wässrigen Phase zurückgewonnen werden und zurückgeführt werden. Die wässrige Phase kann jedoch auch verworfen werden.

Die nach dem Abtrennen des Kohlenwasserstoff/Wasser-Gemisches verbliebene Copolymerisatlösung wird bevorzugt in einen Phasenscheider überführt. Durch Zugabe von weiteren Mengen an Kohlenwasserstoff trennt man die Heteropolysäure aus der Produktphase ab. Die Heteropolysäure wird bevorzugt für die nächste Copolymerisation wiederverwendet. Dieses an sich, beispielsweise aus EP-A 181 621 bekannte Verfahren führt zur Nachfällung der Heteropolysäure aus der organischen Phase. Als Kohlenwasserstoff wird bevorzugt der bereits in die Copolymerisation eingesetzte Kohlenwasserstoff verwendet. Die Heteropolysäure wird bevorzugt für die nächste Copolymerisation wiederverwendet.

Das erfindungsgemäße Verfahren kann sowohl kontinuierlich als auch diskontinuierlich als auch in semi-batch-Fahrweise ausgeführt werden. Unter semi-batch-Fahrweise oder halbkontinuierlicher Fahrweise wird dabei verstanden, dass die Heteropolysäure mit 20 bis 50 Gew.-% der anderen Edukte vorgelegt wird. Im Verlauf der Reaktionszeit wird der verbleibende Rest der Edukte dann zudosiert. Für die kontinuierliche und diskontinuierliche Fahrweise wird zweckmäßigerweise die Heteropolysäure in Mengen von 1 bis 300 Gew.-Teilen, vorzugsweise von 5 bis 150 Gew.- Teilen bezogen auf 100 Gew.-Teile der verwendeten Monomeren (THF und Neopentylglykol), eingesetzt. Es ist auch möglich größere Mengen an Heteropolysäure zum Reaktionsgemisch zu geben.

Die Heteropolysäure kann in fester Form der Umsetzung zugeführt werden, worauf sie durch das Inkontaktbringen mit den weiteren Reaktanten nach und nach unter Ausbildung der flüssigen Katalysatorphase solvatisiert wird. Man kann auch so verfahren, dass man die feste Heteropolysäure mit dem Neopentylglykol und/oder dem THF anmaischt und die dabei erhaltene Katalysatorlösung als flüssige Katalysatorphase in den Reaktor leitet. Dabei kann sowohl die Katalysatorphase als auch das monomere Ausgangsmaterial im Reaktor vorgelegt werden. Es können aber auch beide Komponenten gleichzeitig in den Reaktor eingeleitet werden.

Wasser wird bei kontinuierlicher Fahrweise in einer Menge von 0,1 bis 5 Gew.-%, bevorzugt 0,1 - 3,5-Gew.-%, besonders bevorzugt 0,1 - Gew.-%, bezogen auf die Gesamtmenge an Monomer THF und Comonomer, üblicherweise über eine Füllstandsregelung gesteuert in den Reaktor eindosiert. Zweckmäßigerweise wird frisches Monomer in dem Maße zugeführt, wie Produkt und nicht umgesetztes Monomer aus der Reaktionsapparatur ausgetragen werden. Auf diese Weise kann auch die Verweilzeit, mithin die Polymerisationszeit, gesteuert werden, womit ein weiteres Mittel zur Beeinflussung und Einstellung des mittleren Molekulargewichts und der Molekulargewichtsverteilung des entstehenden Polymeren zur Verfügung steht.

Die Copolymerisation kann durch eine online-Leitfähigkeitsmessung verfolgt und gesteuert werden.

Ein Abbruch der Copolymerisation bei diskontinuierlicher Fahrweise ist in einem Leitfähigkeitsbereich zwischen 0,1 - 2,5 µS je nach gewünschtem Zielmolekulargewicht bevorzugt. Zur besseren Stabilisierung der organischen Produktphase vor oxidativen Schädigung können dieser 10 - 500 ppm, besonders bevorzugt 50 - 300 ppm eines Radikalfängers zugegeben werden. Als Radikalfänger eignen sich besonders 250 ppm 2,6-Di-tert.-butyl-4-methyl-kresol (BHT).

Die Steuerung des mittleren Molekulargewichts über den Wert der elektrischen Leitfähigkeit der Copolymerisationslösung ist ausführlich in der deutschen Anmeldung DE 10259036.2 vom 17.02.2002 der Anmelderin, auf die hier ausdrücklich Bezug genommen wird, offenbart.

Im allgemeinen wird die Copolymerisation in Abhängigkeit von der Katalysatormenge und der Reaktionstemperatur beim chargenweisen Verfahren während eines Zeitraums von 0,5 bis 70 Stunden, vorzugsweise von 5 bis 50 Stunden und besonders bevorzugt von 10 bis 40 Stunden durchgeführt. Beim kontinuierlichen Verfahren werden üblicherweise Verweilzeiten von 1 bis 50 und vorzugsweise von 10 bis 40 Stunden eingestellt. Zu Beginn einer kontinuierlichen Umsetzung benötigt das beschriebene Reaktionssystem eine gewisse Zeit bis sich ein stationäres Gleichgewicht eingestellt hat und während der es vorteilhaft sein kann, den Reaktorauslass geschlossen zu halten, also keine Produktlösung aus der Reaktionsapparatur auszutragen.

Die Copolymerisation wird üblicherweise bei Temperaturen von 20 bis 100°C, vorzugsweise bei 30 bis 80°C vorgenommen. Vorteilhaft wird dabei unter Atmosphärendruck gearbeitet, die Umsetzung unter Druck, vornehmlich unter dem Eigendruck des Reaktionssystems, kann sich aber gleichfalls als zweckmäßig und vorteilhaft erweisen.

Die Reaktoren sollten sowohl bei der chargenweisen, der semi-batch-Fahrweise als auch bei der kontinuierlichen Verfahrensweise mit leistungsfähigen Mischeinrichtungen, beispielsweise Rührwerken, ausgestattet sein.

Als Reaktor sind alle dem Fachmann bekannten Flüssigreaktoren mit inerter oder/und externer freie Flüssigkeitsoberfläche zur notwendigen Abdampfung der wasserhaltigen Brüden, bei denen in der Flüssigkeit genügend hohe Scherkräfte zur Suspendierung der Katalysatorphase in der homogenen Monomer/Polymerphase erreicht werden, geeignet (Rührkessel, Umlaufreaktoren, Strahlschlaufe, pulsierte Einbauten). Eine besonders günstige Bauart ist die Ausführung als Strahlschlaufe, da hier die notwendige Temperierung des Reaktors auf einfache Weise in den Flüssigumlaufstrom integriert werden kann. Aus der Reaktionsmischung wird kontinuierlich oder diskontinuierlich das wasserhaltige Gemisch des Kohlenwasserstoffs abgedampft und der Wassergehalt des Reaktorinhaltes so auf reaktionstechnisch günstige Werte eingestellt.

Das erfindungsgemäße Verfahren wird vorteilhaft unter einer Inertgasatmosphäre durchgeführt, wobei beliebige Inertgase, wie Stickstoff oder Argon, verwendet werden können. Die Reaktanten werden vor ihrer Verwendung von gegebenenfalls darin enthaltenem Wasser und Peroxiden befreit.

Dabei kann die Umsetzung in herkömmlichen, für kontinuierliche Verfahren geeigneten Reaktoren oder Reaktoranordnungen, beispielsweise in Rohrreaktoren, welche mit Innenausbauten ausgestattet sind, die eine gute Durchmischung der emulsionsartigen Copolymerisationsansatzes gewährleisten oder aber auch in Rührkesselkaskaden ausgeführt werden.

Unter einem emulsionsartigen Copolymerisationsansatz versteht man einen bei Wassergehalten von 2 bis 10 mol Wasser/pro Mol Heteropolysäure.

Nach dem erfindungsgemäßen Verfahren können Polyoxyalkylenglykole, wirtschaftlich, ohne Verlust der Katalysatoraktivität und in guter Ausbeute, selektiv und mit einer engen Molekulargewichtsverteilung sowie in reiner Form mit niederen Farbzahlen erhalten werden. Die Copolymere weisen Einbauraten des Neopentylglykol Comonomers von 5 bis 50 Gew.%, bezogen auf das Copolymer, und mittlere Molekulargewichte Mₙ von 600 bis 6000 auf. Die erfindungsgemäß herstellbaren Polyoxyalkylenglykole finden beispielsweise zur Herstellung spezieller Polyurethane, die als hochelastische Verbundwerkstoffe geeignet sind. Ein Polyurethanpolymer, welches die erfindungsgemäß herstellbaren Copolymere beinhaltet, weist eine hohe Verlängerung nach dem Bruch, eine geringe Spannungsänderung bei Verlängerung, einen geringen Hystereseverlust beim Ausdehnen und Zusammenziehen sowie eine hohe Elastizität auch bei extremer Kälte auf.

### Beispiele

### Bestimmung der OH-Zahl

Unter der Hydroxylzahl wird diejenige Menge an Kaliumhydroxid in mg verstanden, die der bei der Acetylierung von 1 g Substanz gebundenen Menge Essigsäure äquivalent ist.

Die Hydroxylzahl wird bestimmt durch die Veresterung der vorhandenen Hydroxylgruppen mit einem Überschuss an Essigsäureanhydrid. Nach der Umsetzung wird das überschüssige Essigsäureanhydrid mit Wasser hydrolysiert und als Essigsäure mit Natronlauge zurücktitriert.

### Bestimmung des organisch gebundenen Stickstoffs

Die Bestimmung des organisch gebundenen Stickstoffs erfolgte nach der bei Fr. Ehrenberger, Quantitative Organische Elementaranalyse, Verlag Chemie, 1991, Seiten 382-384, beschriebenen Methode mit einem ANTEK 9000 Vertikal N-Analysator der Firma ANTEK.

### Beispiel 1

In einem 10 l doppelwandigen Reaktor mit einer Magnetrührvorrichtung und aufgesetzter Gegenstromrektifikationskolonne (30 theoretische Stufen) wurde ein Gemisch aus 5047 g THF und 266 g Neopentylglykol technischer Qualität zu einer homogenen Lösung verrührt. Dazu wurden unter Rühren 4125 g einer Dodecaphosphorwolfrarrrsäure (H₃PO₄ * x H₂O mit x = 4-7) gegeben. Die erhaltene Emulsion wurde bei 95°C 5 h gerührt. Im Anschluss wurden 200 g/h eines Gemisches aus Neopentylglykol/THF/n-Pentan, welches zu 5 Teilen aus marktüblichem NPG (Gehalt an organischem Stickstoff 15 ppm), zu 2 Teilen aus Pentan und zum Rest aus THF besteht, kontinuierlich über einen Vorreaktor, gefüllt mit Kationenaustauscher (Lewatit® S100 der Firma Bayer AG, Leverkusen) in das Reaktionsgefäß gegeben. Nach dem Durchgang durch den Vorreaktor wies das NPG nach Entfernung der leichtflüchtigen Komponenten noch einen Gehalt an < 1 ppm organisch gebundenen Stickstoff auf. Die Reaktionstemperatur wurde auf 66-67°C gehalten. Das dabei abdampfende THF/Pentan/Wassergemisch wurde kondensiert. Anfallendes Wasser wurde nach erfolgter Phasentrennung verworfen.

Der kontinuierlich erhaltene Reaktionsaustrag des Polymerisationsreaktors wurde mit 250 g Pentan versetzt und einer Phasentrennung unterworfen. Die schwere Katalysatorphase wurde in den Polymerisationsreaktorzurückgefahren. Die obere Phase wurde bei 20°C über eine Kombination aus Kationen- und Anionentauscher gefahren, welche jeweils als Festbett angeordnet waren.

Aus dem so von Säurespuren befreiten Reaktoraustrag wurde bei 1,0 bar und 75°C THF einstufig abgedampft und in die Reaktion zurückgefahren. Bei 15 mbar und 170°C wurde dann das nicht umgesetzte NPF ebenfalls einstufig abgedampft und in die Reaktion zurückgefahren.

Der durch Probennahme Copolymerisationsumsatz betrug am Anfang des Versuchs ca. 37 %. Innerhalb einer Versuchsdauer von 2000 h desaktivierte der Katalysator nur unmerklich. Nach 2000 Betriebsstunden betrug der mittlere Polymerisationsumsatz 36 %. Dies entspricht einer mittleren Desaktivierung von 0,012 %/Tag.
Es wurde ein Copolymeres mit einer mittleren OH-Zahl von 58 mg KOH/g erhalten.

### Vergleichsbeispiel 2

Das Beispiel 1 wurde analog mit marktüblichem NPG technischer Qualität (Gehalt an organisch gebundenem Stickstoff 15 ppm) wiederholt, jedoch wurde der mit lonenaustauscher gefüllte Vorreaktor entfernt.

Der durch Probennahme bestimmte Copolymerisationsumsatz betrug am Anfang des Versuchs 37 %. Innerhalb einer Versuchsdauer von 2000 h desaktivierte der Katalysator stark. Nach 2000 Betriebsstunden betrug der mittlere Polymerisationsumsatz 30,6 %. Dies entspricht einer mittleren Desaktivierung von ca. 0,08 %/Tag.

## Patentansprüche

1. Verfahren zur einstufigen Herstellung von Polyoxyalkylenglykolen durch Copolymerisation von THF und Neopentylglykol in Gegenwart einer Heteropolysäure, das **dadurch gekennzeichnet ist, dass** der Gehalt an organisch gebundenem Stickstoff im Neopentylglykol kleiner 5 ppm ist.

2. Verfahren zur einstufigen Herstellung von Polyoxyalkylenglykolen nach Anspruch 1, **dadurch gekennzeichnet, dass** der Gehalt des Neopentylglykols an organisch gebundenem Stickstoff durch Behandlung von Neopentylglykol technischer Qualität durch Umkristallisation, Lösungsmittel-Extraktion oder durch Behandlung mit einem Ionentauscher erzielt wird.

3. Verfahren zur einstufigen Herstellung von Polyoxyalkylenglykolen, nach einem der Ansprüche 1 oder 2, **dadurch gekennzeichnet, dass** 3 bis 20 Gew.-% Neopentylglykol, bezogen auf Tetrahydrofuran, eingesetzt werden.

4. Verfahren zur einstufigen Herstellung von Polyoxyalkylenglykolen nach einem der Ansprüche 1 bis 3, **dadurch gekennzeichnet, dass** die Copolymerisation in Gegenwart eines Kohlenwasserstoffs durchgeführt wird.

5. Verfahren zur einstufigen Herstellung von Polyoxyalkylenglykolen nach einem der Ansprüche 1 bis 4, **dadurch gekennzeichnet, dass** das Verfahren kontinuierlich geführt wird.

6. Verfahren zur einstufigen Herstellung von Polyoxyalkylenglykolen nach einem der Ansprüche 1 bis 5, **dadurch gekennzeichnet, dass** die Copolymerisation bei Temperaturen von 20 bis 100°C durchgeführt wird.

## Claims

1. A process for the single-stage preparation of polyoxyalkylene glycols by copolymerization of THF and neopentyl glycol in the presence of a heteropolyacid, wherein the content of organically bound nitrogen in the neopentyl glycol is less than 5 ppm.

2. The process for the single-stage preparation of polyoxyalkylene glycols according to claim 1 wherein the content of organically bound nitrogen in the neopentyl glycol is achieved by treatment of technical-grade neopentyl glycol by recrystallization, solvent extraction or by treatment with an ion exchanger.

3. The process for the single-stage preparation of polyoxyalkylene glycols according to claim 1 or claim 2 wherein from 3 to 20% by weight of neopentyl glycol, based on tetrahydrofuran, is used.

4. The process for the single-stage preparation of polyoxyalkylene glycols according to any of claims 1 to 3 wherein the copolymerization is carried out in the presence of a hydrocarbon.

5. The process for the single-stage preparation of polyoxyalkylene glycols according to any of claims 1 to 4 wherein the process is carried out continuously.

6. The process for the single-stage preparation of polyoxyalkylene glycols according to any of claims 1 to 5 wherein the copolymerization is carried out at from 20 to 100°C.

## Revendications

1. Procédé de préparation en une étape de polyoxyalkylèneglycols par copolymérisation de THF et de néopentylglycol en présence d'un hétéropolyacide, **caractérisé en ce que** la teneur en azote organiquement fixé dans le néopentylglycol est inférieure à 5 ppm.

2. Procédé de préparation en une étape de polyoxyalkylèneglycols suivant la revendication 1, **caractérisé en ce que** la teneur du néopentyglycol en azote organiquement fixé est obtenue par traitement de néopentylglycol de qualité technique par recristallisation, extraction par un solvant ou traitement avec un échangeur d'ions.

3. Procédé de préparation en une étape de polyoxyalkylèneglycols suivant l'une des revendications 1 et 2, **caractérisé en ce que** 3 à 20 % en poids de néopentylglycol sont, par rapport au tétrahydrofurane, mis en oeuvre.

4. Procédé de préparation en une étape de polyoxyalkylèneglycols, suivant l'une des revendications 1 à 3, **caractérisé en ce que** la copolymérisation est effectuée en présence d'un hydrocarbure.

5. Procédé de préparation en une étape de polyoxyalkylèneglycols suivant l'une des revendications 1 à 4, **caractérisé en ce que** le procédé est conduit en continu.

6. Procédé de préparation en une étape de polyoxyalkylèneglycols suivant l'une des revendications 1 à 5, **caractérisé en ce que** la copolymérisation est effectuée à des températures de 20 à 100°C.
